# EUROPEAN PATENT SPECIFICATION

(11) **EP 0 662 050 B1**
(45) Date of publication and mention of the grant of the patent: **06.08.1997**
(21) Application number: 93921001.9
(22) Date of filing: 24.09.1993
(51) Int. Cl.: B60C 23/04

(54) **TYRE CONDITION MONITORING**
REIFENZUSTANDSÜBERWACHUNG
SYSTEME DE CONTROLE DE L'ETAT DES PNEUS

(30) Priority: 24.09.1992 GB 9220234
(43) Date of publication of application: 12.07.1995
(73) Proprietor: OTTER CONTROLS LIMITED, Buxton, Derbyshire SK17 6LA (GB)
(72) Inventor: BANN, John, Richard 9 Trenchard Drive, Buxton Derbyshire SK17 9JY (GB); RANK, Nicholas, Ramon 6 Lee Dale, Buxton Derbyshire SK17 7LQ (GB); BROMLEY, Andrew, Howard 51 Windsor Road, Buxton Derbyshire SK17 7NS (GB); PARRY, Byron, Saul 8 London Road, Derbyshire SK17 9NX (GB); LYNCH, Vincent 18 Okehampton Crescent, Cheshire M33 5HR (GB); DERBYSHIRE, Andrew, John 12 Poplar Avenue, Stockport Cheshire SK12 4HR (GB); WATTERS, Alexander, George 8 High Lane, Near Leek Staffordshire ST13 7DY (GB)
(74) Representative: Whitten, George Alan
(86) International application number: GB9302005
(87) International publication number: WO9406640

(56) References cited:
- EP-A- 0 279 711
- WO-A-92/14620
- DE-A- 2 850 787
- US-A- 4 703 650

## Description

The invention relates to a method of and apparatus for monitoring the condition of one or more tyres on a vehicle.

To a large extent the safety of a vehicle depends on the condition of its tyres and, indeed, research has shown that a significant proportion of road accidents involve vehicles with poorly maintained tyres. In addition to the obvious danger associated with a catastrophic failure (tyre blow-out) while the vehicle is moving there are other less obvious disadvantages associated with poorly conditioned tyres. For example, tyres which are inflated to slightly below their designed working pressure cause an increase in the running cost of the vehicle by increasing the rolling resistance and thereby increasing the fuel consumption of the vehicle. Slightly under-inflated tyres also wear out unevenly and thus more quickly than correctly inflated tyres. Under-inflated tyres are more vulnerable to damage and can affect the handling of the vehicle. Tyres which are inflated to a level significantly below their designed working pressure are furthermore susceptible to internal damage caused for example by high internally generated temperatures. Internal damage can lead to a later failure even after the tyre has been correctly inflated.

There has been a great deal of interest in tyre monitoring in the past and some examples of recent proposals are disclosed in US-A-4,703,650, US-A-4,737,761, US-A-4,823,107, US-A-4,837,553, US-A-4,843,872, US-A-4,893,110, US-A-5,029,468 and US-A-5,054,315.

A major problem with tyre condition monitoring is that a tyre is used in an hostile environment. There is limited space between the tyre and the wheel and between the wheel and the axle to which it is mounted and the centrifugal forces generated in a rotating wheel are extremely large. Furthermore, the temperature of the environment covers a wide range and can rise to relatively high levels even within a properly maintained tyre. The wheel and other parts in its immediate vicinity are open to the road and weather and therefore corrosion can also be a problem. Moreover, since the wheel rotates in use there are difficulties in extracting signals from sensors in the wheel for processing and analysis and in practice a significant majority of tyre sensors use signal transmission which does not rely on a wired connection between the sensor and the unit at which the signal is processed and analysed.

A tyre condition monitoring system should provide an indication of at least some of the following conditions, namely: low pressure; high pressure; high temperature; catastrophic failure; and system failure. The system should provide an indication of the condition and of the tyre in which it exists.

A simple tyre pressure monitoring system is disclosed in US-A-4,814,745 and is marketed under the name "TireMate". The "TireMate" system comprises a monitor unit comprising a display aid locatable in the cabin of a vehicle. The unit provides a visual indication of a faulty tyre together with an audible alarm when tyre pressure falls below a predetermined value. Pressure sensors are attached to the value stem of each wheel to monitor continuously the pressure in the tyre. Each sensor includes a radio transmitter that transmits a pressure-related signal to the monitor unit. The sensors are powered by a replaceable battery.

Further examples of previous work in this area are discussed in "Experience with a Tyre Monitoring System" by D.J. Myatt, I.Mech.E., 1989, C391/026, "Automotive Tyre Pressure Sensing" by J.D. Turner, and USITT NEWS - Newsletter of the University of Southampton Institute of Transducer Technology, Vol. 6, No. 1, February 1992 (ISSN 0964-850X).

Also, WO 92/14620 was cited during the examination of this application by the International Preliminary Examination Authority. The citation describes a tyre monitoring apparatus and method in which the frequency at which signals from a sensor are sampled is varied depending on changes in the value of the signals between samples. Data is transmitted at first regular intervals of time when the signals meet a first set of conditions and are transmitted at second regular intervals of time when the signals meet a second set of conditions.

The invention aims to provide an improved method of and apparatus for monitoring the condition of one or more tyres on a vehicle.

According to one aspect of the invention there is provided an apparatus for monitoring the condition of one or more tyres on a vehicle, the apparatus comprising a sensing unit for each of the tyres to be monitored, the sensing unit comprising a sensor for outputting a signal representing at least one sensed parameter relating to the condition of the tyre, a transmitter for transmitting data representing the sensed parameter at spaced time intervals, and a timing circuit for defining time periods between said time intervals and for placing said sensing unit in a standby mode during said time periods, characterised by means for monitoring the signal from the sensor to determine whether or not to transmit the data.

According to another aspect of the invention there is provided a method of monitoring the condition of a tyre fitted to a vehicle, the method comprising sensing a parameter related to the condition of the tyre, outputting a signal representing the sensed parameter, creating data representing the sensed parameter for transmission of spaced time intervals, and defining time periods between spaced time intervals for the transmission of data, characterised by monitoring the signal from the sensor to determine whether or not to transmit the data.

The invention also provides a sensing device for sensing the condition of a tyre in use on a vehicle, the device comprising a sensor for providing a signal representing the condition of the tyre, signal processing circuitry for conditioning the signal from the sensor for transmission, and a power supply arranged to power said signal processing circuitry for transmission of said processed signal at predefined intervals, characterised by monitoring means for monitoring the signal from the sensor for a change in the condition of the tyre sensed thereby, and in that the power supply is further arranged to power said signal processing circuitry for transmission in response to said monitoring means detecting a predetermined change in the condition of the tyre.

Furthermore, the invention provides a transducer for monitoring the condition of a tyre, the transducer comprising sensing means for sensing at least one parameter representing the condition of the tyre, code generating means for generating a preselected code, oscillating means responsive to said sensing means for generating a signal that oscillates at a frequency relating to the value of the sensed parameter, the code generating means and the oscillating means cooperating such that said preselected code is generated over a period of time representative of the value of the sensed parameter, and a timed power supply arranged to power said code generating means, oscillating means and transmitting means such that said code is only transmitted from time to time, characterised by monitoring means for continuously monitoring said sensing means and for overriding said power supply such that power is supplied to said code generating means, oscillating means and transmitting means when a predetermined condition is sensed by said sensing means.

The invention also provides a transducer for monitoring the condition of a tyre, the transducer comprising sensing means for sensing at least one parameter representing the condition of the tyre, converting means for converting the sensed parameter into digital data representative thereof, encoding means for encoding the digital data for transmission, and timing means for defining spaced time intervals in which said parameter is sensed and said data is encoded for transmission and for causing power to be removed from said converting means and said encoding means during periods of time between said spaced intervals, characterised by monitoring means for monitoring the digital data to determine whether or not to transmit the data.

The above and further features of the invention are set forth with particularity in the appended claims and together with advantages thereof will become clearer from consideration of the following detailed description of an exemplary embodiment of the invention given with reference to the accompanying drawings.

In the drawings:
Figure 1 is a schematic diagram of the functional units of a tyre condition sensing circuit;
Figure 2 shows waveforms generated in the sensing circuit of Figure 1;
Figure 3 shows a waveform transmitted by the sensing circuit of Figure 1;
Figure 4 shows waveforms transmitted by four sensors fitted in a vehicle;
Figure 5 is a schematic diagram of the functional units of a signal processing and analysis system;
Figure 6 is a schematic perspective view of a tyre valve adapted to contain the circuit of Figure 1;
Figure 7 is a sectional view of the valve in Figure 6;
Figure 8 shows the characteristics of a receiving antenna;
Figure 9 is a schematic diagram showing a modification to the circuit of Figure 1; and
Figure 10 is a schematic diagram of the functional units of an alternative tyre condition sensing circuit.

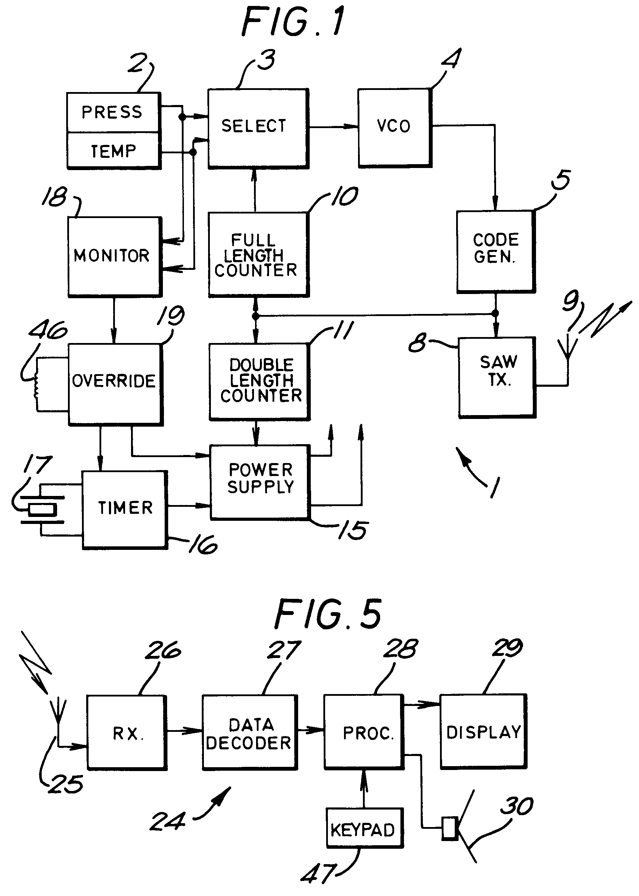

Turning now to Figure 1 of the accompanying drawings, a tyre condition sensing circuit or unit 1 comprises a sensor 2 for sensing pressure and temperature and for outputting respective signals having a voltage representative thereof. In use, the sensing circuit 1 is fitted to a tyre as will be described in greater detail hereinafter. The signals from the sensor 2 are applied, via a selector 3 which selects one or other of the signals as described in greater detail hereinafter, to a voltage controlled oscillator VCO 4. The signal output from the VCO 4 is a series of pulses each having a width proportional to the voltage applied at the input. Thus, the width of a pulse output from the VCO 4 is proportional to the pressure or temperature of the tyre sensed by the sensor 2. The pulse output from the VCO 4 is input to a code generator 5 and causes the code generator to clock out a series of pulses representing a predefined code.

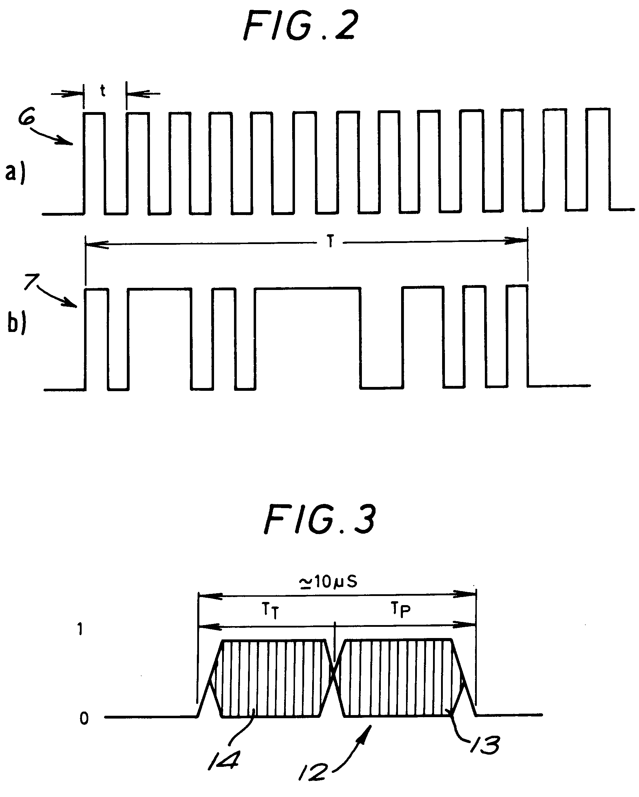

Figure 2 of the accompanying drawings shows (a) a stylised signal 6 representing the output from the VCO and (b) a stylised signal 7 representing the output from the code generator 5. The signal 6 output from the VCO 4 has a cycle time t which is proportional to the voltage applied to the VCO, which voltage is in turn proportional to the pressure or temperature sensed by the sensor 2. Normally the pressure or temperature in a tyre will remain constant or will change only slowly as, for example, in use the tyre changes from a rest state to a normal operating state. Accordingly, the cycle time t of the signal 6 output from the VCO 4 will remain substantially constant over several cycles.

The code generated by the code generator has a predefined fixed number of bits, e.g. 18 bits. The code is carried in the signal 7 by any of the many established coding techniques, for example Manchester, return-to-zero or non-return-to-zero-invert encoding, and generally each bit of the code will be output in a single cycle time t in the VCO output signal 6. Since the cycle time t is proportional to pressure or temperature sensed by the sensor 2, it follows that the time T taken to output the code in signal 7 also is proportional to the sensed temperature or pressure. Thus, the signal 7 contains information which identifies the sensing circuit 1 (i.e. the code) and which represents the sensed temperature or pressure (i.e. the duration of the period T taken to output the code).

Returning to Figure 1 of the drawings, the sensing circuit 1 further comprises a surface acoustic wave (SAW) transmitter 8 for transmitting the coded signal 7 as a radio signal via an antenna 9. Any suitable known technique may be used by the transmitter 8 to modulate the signal 7 onto a radio carrier wave for transmission via the antenna 9. Frequency modulation (FM) in the form of frequency shift keying (FSK) to represent the binary code of the signal 7 is well suited to the task.

The coded signal 7 from the code generator 5 is also input to two counters 10 and 11 which both count the number of bits in the signal 7. The counter 10 is arranged to identify when all eighteen bits of the code have been output from the code generator 5 and in response thereto the counter 10 outputs a signal to the selector 3. Initially, the selector 3 connects the pressure signal output from the sensor 2 to the VCO 4 and the time interval t of the signal 6 is proportional to the pressure sensed by the sensor 2. When the counter 10 outputs a signal, the selector 2 disconnects the pressure signal and connects instead the temperature signal output from the sensor 2 to the VCO 4. Thereafter, the VCO 4 is driven by the voltage of the temperature signal and thus the time interval t of the VCO signal represents the sensed temperature as does the period T of the coded signal 7.

As shown in Figure 3 of the accompanying drawings the effect of the selector 3 switching between the pressure signal output from the sensor and the temperature signal is to cause the code generator 5 to output a signal 12 comprising two coded bursts 13, 14 of information. The first burst 13 lasts for a period of Tp, i.e. a period of time related to the sensed pressure, and the second burst 14 lasts for a period Tt, i.e. a period of time related to the sensed temperature. In both bursts 13, 14 the code is the same and is that predefined in the code generator 5. The exact duration of the two bursts 13, 14 will of course depend on the sensed values of temperature and pressure but is preferably about 10mS in total.

The counter 11 is arranged to identify when all eighteen bits of the code have been output twice from the code generator 5, once for the sensed pressure and once for the sensed temperature. When the code has been transmitted twice the counter 11 outputs a signal to a power supply 15.

The power supply 15 comprises a small and light battery, for example a lithium cell, and circuitry (not shown) for connecting and disconnecting the power output from the battery to other parts of the circuit 1. A timer circuit 16 associated with the power supply 15 supplies an enabling signal thereto at regular intervals causing power to be output from the power supply to the other parts of the circuit 1. The timer circuit 16 comprises a watch-type timer which is extremely accurate and has very low power requirements. The power supply 15 supplies power continuously to the time circuit 16 but there is not an appreciable drain on the energy in the battery because the power consumption of the watch-type timer is so low as to be negligible. The timer is driven by a crystal 17 in the usual way.

The timer circuit 16 in combination with the double length counter 11 serve to ensure that the circuit 1 is only powered by the power supply 15 for the short time period required to sense the condition of the tyre to which the unit is fitted and to transmit the information via the antenna 9. The timer circuit 16 causes the circuit 1 to be energised and the double length counter 11 causes the unit to be de-energised once the tyre condition information has been transmitted.

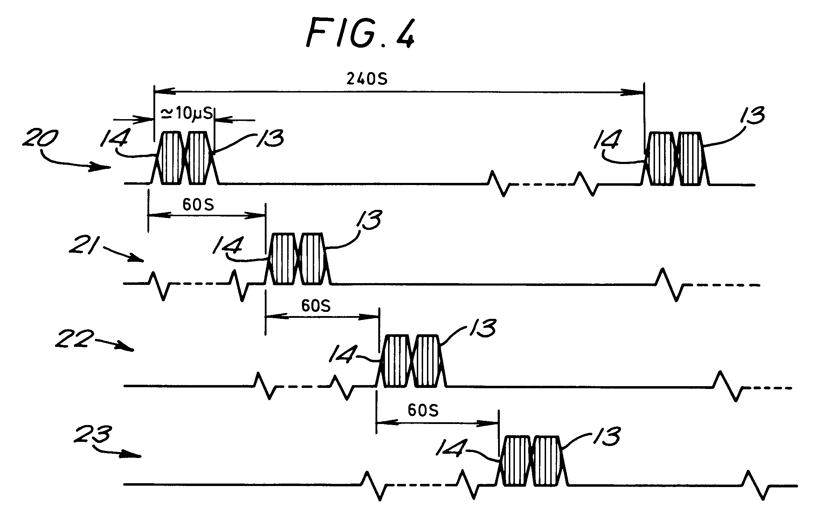

As shown in Figure 4 of the accompanying drawings the bursts 13, 14 are transmitted from the circuit 1 at regular intervals. The interval between bursts can of cause be set at any suitable period but a period of 240 seconds (4 minutes) has been found to be sufficiently frequent under normal working conditions to provide a useful indication of the condition of a car tyre.

At this rate of transmission the power consumption of the circuit is sufficiently low to yield a battery life expectancy of several years which is well in excess of the average life span of most tyres in normal everyday use. The circuit can therefore be fitted to a wheel at the same time as a tyre is replaced and can then be forgotten until the tyre is again replaced.

Returning again to Figure 1 of the accompanying drawings, the circuit 1 further comprises a monitor circuit 18 and an override circuit 19. The monitor circuit 18 receives signals directly from the sensor 2 and constantly monitors said signals for any sudden change in the condition of the tyre. It is not unusual for there to be a marked change in the condition of a tyre, for example a rapid rise in temperature, shortly before a catastrophic failure of the tyre. In other words, it is possible to detect a blow-out before it occurs and to alert the driver so that he can take appropriate action to protect himself and the vehicle.

When the monitor circuit 18 detects a sudden rise in temperature, fall in pressure or combination of the two it outputs a signal to the override circuit 19. The override circuit 19 in turn causes the power supply 15 to power the circuit 1 so that pressure and temperature information is transmitted by the transmitter 8 immediately an unsatisfactory condition is detected in the tyre. Thus, the monitor circuit 18 serves as an emergency override which causes the unit to be energised immediately, without the need to wait for up to four minutes for the timer 16 to activate the power supply, when a potentially dangerous tyre condition arises.

In practice a separate sensor unit 1 is used for each tyre of a vehicle. Figure 4 shows transmitted signals 20 to 23 from four separate sensor units which for the purpose of explanation are assumed to be fitted to the wheels of a four wheeled vehicle such as a car. Each unit is powered and controlled independently by its own power supply and control circuitry. At the time of manufacture or installation of the units, the respective timers are set so that one unit transmits its bursts of information approximately 60 seconds (one minute) after the previous unit has transmitted its bursts.

In order to facilitate identification of the different units and the wheels in which they are fitted, each unit is arranged to have its own unique code signal 7 which is transmitted in the two bursts 13, 14 of its signal 20 to 23. Additionally, or alternatively, the order in which the bursts of data in the signals 20 to 23 is transmitted may be related to the position of the units on the vehicle. For example, the unit in the driver-side front wheel may transmit first, followed by the driver-side rear, the passenger-side front and the passenger-side rear, and then back again to the driver-side front wheel.

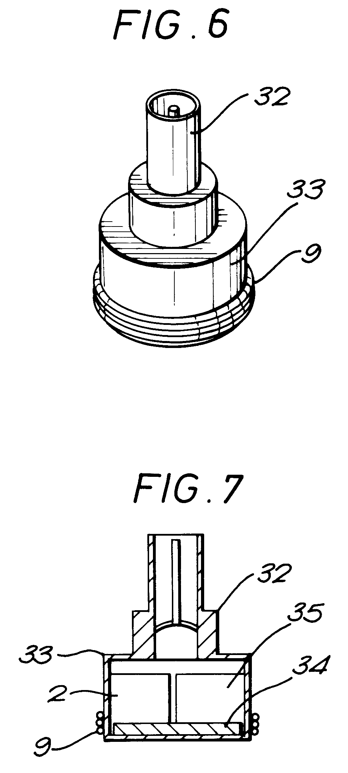

Signals transmitted by the fitted units 1 are received by a processing and analysis system 24 as shown schematically in Figure 5 of the accompanying drawings. Referring to Figure 5, the system 24 comprises a receiving antenna 25 which receives RF signals transmitted from a unit or units 1 and passes the signal to an RF receiver 26 for demodulation. The receiver 26 outputs a signal corresponding to the signal 12 in Figure 3 of the drawings generated by the code generator 5 in the unit 1. Thus, the signal from the receiver 26 contains information relating to the identity of the unit (the code), the sensed pressure (Tp) and the sensed temperature (Tt) and this information is extracted from the signal by a data decoder circuit 27.

The pressure, temperature and identity information is analysed by a processing unit 28 for changes, trends and other useful indicators of the condition of the tyres of the vehicle. A display 29 and an audible warning device 30, e.g. a loudspeaker, are driven by the processing unit 28 to provide a visual indication of the condition of the vehicle's tyres and an audible/visible warning of a hazardous condition.

Figures 6 and 7 of the accompanying drawings show schematic perspective and sectional views of a valve 32 adapted to receive the unit 1. A housing 33 is mounted to the rear of the valve 32 and contains the sensor 2, a lithium cell 34 and all other circuitry of the unit 1 in the form of one or more custom integrated circuits 35. The antenna 9 of the transmitter comprises a length of wire wrapped around the outside of or incorporated in the housing 33.

The sensor 2 may be any suitable device capable of sensing both temperature and pressure in the relatively hostile environment within a tyre. Differential pressure sensors have been used in the past to measure the pressure in a tyre. Such sensors rely on tyre air pressure being applied to one side of the sensor while the other side of the sensor is open to atmosphere. A problem with using a differential sensor is that if the sensor fails then there will be a corresponding deflation of the tyre because the sensor forms the barrier between air inside the tyre and atmosphere. This problem is avoided by using an absolute pressure sensor capable of providing a signal representative of the pressure without the need to compare with a reference pressure. Therefore, the sensor 2 is preferably a piezo-resistive sensor which provides both temperature- and pressure-related signals without the need to reference to atmosphere. Ascom Microelectronics in Switzerland make a suitable sensor. Temperature may also or alternatively be sensed by way of a thermistor of for example 100KΩ normal resistance at 25°C.

The use of such a sensor simplifies construction of the unit because the housing 33 can be mounted to a standard off-the-shelf valve without first having to modify the valve extensively so that the valve fails safe (i.e. closes) in the event that the sensor fails. The housing simply provides a non-restricted path between the valve and the inside of the tyre. Alternatively, the circuit 1 may be provided in a housing (not shown) arranged to be secured in the well of the wheel by any suitable securing device such as a strap which extends around the inside of the wheel.

Different sensors are required to suit different vehicles because the operating condition of tyres varies significantly between different types of vehicle. For example, the pressure in the tyres of most road cars is less that 50psi and the operating temperature normally does not increase about 85°C. The pressure in road-haulage and other industrial vehicles can be as high as 150psi. Both of these operating pressure conditions are well within the capabilities of off-the-shelf components. However, the same cannot be said of sensors for use with tyres operating in extreme temperatures. At one end of the temperature range are vehicles operating in arctic conditions where the operating temperature of the tyres does not rise above -40°C. At the other end are high performance vehicles such as racing cars where tyres operate at temperatures as high as 150°C. Where extremes of temperature are likely to be experienced in normal use suitably ruggedized sensors and circuitry should of course be used.

The radio frequency at which the data is transmitted depends on two factors. Firstly, the radio signal must be able to be received outside the tyre - it is useless if the signal remains trapped within the wheel and tyre. Secondly, radio transmissions in many countries are controlled by government thus limiting the range of available frequencies. A transmission frequency in the region of 418MHz is well suited to penetration and propagation through a radial tyre on a steel wheel and, at least in the UK, this a frequency which may be used. Another factor that influences transmissibility is the power of transmission. In the UK the maximum allowable power for this type of use is 250mW but this is far greater than is actually required because of the small distances involved. A transmission power of 40mW is adequate.

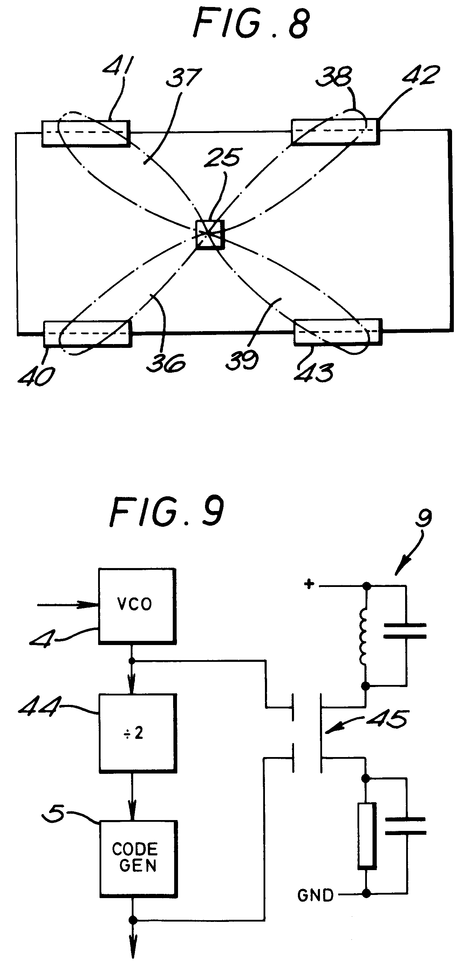

Signals transmitted by the antenna 9 are circularly polarised because the wire forming the antenna is wrapped around or in the housing 33. This helps to reduce interference from other sources. The receiving antenna 25 clearly must be capable of receiving circularly polarised signals but otherwise there is no restriction on the form or position of the receiving antenna. Indeed, the receiving antenna could comprise part of the wiring loom of the vehicle isolated from other parts of the loom by inductors in series in the loom. In order to increase sensitivity, and thereby reduce the transmission power requirements of the unit 1, the receiving antenna may be made directional as shown in Figure 8 of the accompanying drawings. As shown therein the receiving antennas characteristics are such that there is a high gain lobe 36-39 for each of the vehicles wheels 40-43. The design and construction of antennas having such characteristics are *per se* well known and require no further explanation herein.

The transmitter 8 may be any of the well-known radio frequency transmitters that are readily available. For example the SAW resonator may be replaced by a coaxial ceramic resonator. Alternatively, the transmitter 8 may be realised by a variation to the circuitry as shown in Figure 9 of the drawings. Referring to Figure 9, the VCO 4 is modified to oscillate twice as fast as in the Figure 1 arrangement. The output from the VCO 4 is supplied to a divide-by-two unit 44 and to one gate of a dual gate MOSFET 45. The divide-by-two output drives the code generator 5 at the same rate as previously and in addition to the connections to the two counters 10, 11 (see Figure 1) the code generator output is connected to the other gate of the MOSFET 45. The VCO 4 thus generates an RF carrier which is summed (amplitude modulated) by the output from the code generator 5 and the thus produced signal is output from the MOSFET 45 for transmission via the antenna 9.

Control by an installer of the unit 1 and/or the owner of a vehicle to which the unit is fitted is provided by a hand held unit (not shown) and an inductive sensor 46 connected to the override circuit 19, as shown in Figure 1 of the drawings. The hand held unit may be an oscillator-driven coil which causes a current to be induced in the inductor 46 when the hand held unit is brought near to the inductor 46. Different frequencies can be selected to cause the override circuit to implement different operations. During installation stimulation of the inductor 46 can be used to cause the override circuit 19 to reset the timer 16. In this way the sixty second spacing between the transmission of bursts (see Figure 4) can be preset for each wheel. In everyday use, stimulation of the inductor 46 will cause the override circuit 19 to activate the power supply 15 thereby energising the other circuitry and causing pressure temperature data to be transmitted.

The information transmitted by each unit 1 is of course open to interpretation in several different ways depending on the operating characteristics of the vehicle in which the system is used and on the requirements of the user. For example, the system may be required to perform some of the following functions. Since the unit 1 is powered internally it will continually transmit information at four minute intervals relating to the condition of its tyre. The analysis system 24 should be able to take advantage of this and therefore should be capable at all times of receiving and analysing information when it is transmitted. In this way, when the vehicle is switched on (say first thing in the morning) the system will display an up to date indication of the condition of the tyres before the vehicle is used. If the pressure in a tyre was below a predetermined level the user would be warned before driving the vehicle enabling him to take appropriate action before starting a journey.

The display of information may be a simple indicator system, e.g. one light emitting diode for each tyre, which provides an illuminated warning when the pressure in a tyre falls below a level preset in the processor 28 during installation. In a more sophisticated system a numerical display can be employed to provide a numerical indication of the sensed pressure and/or temperature in a selected tyre or each tyre in turn. In a sophisticated system the above discussed hand held controller could be used to override the timer in a unit whilst a tyre is being inflated so that pressure information is continuously transmitted for numerical display thereof. In this way the system would act as a pressure gauge thereby eliminating errors caused by using other gauges of unknown accuracy, such as garage forecourt gauges which are notoriously inaccurate. An audible indication could be given once the pressure had reached the correct level.

When sensing units 1 and an analysis system 24 are first installed in a vehicle, the system 24 lacks the necessary information to be able to distinguish transmissions from one unit from those of another. The processor 28 must be provided with the necessary information and to this end the analysis system comprises a keypad 47. The system 24 can be placed in an initialising mode through the keypad 47 in order to enable the installer to customise the system to the vehicle in which it is fitted. In the initialising mode the sensitivity of the receiver 26 can be adjusted to a level where transmissions from other sources are unlikely to interfere with those from units fitted to the vehicle. Each unit fitted to the vehicle is then activated by way of the above discussed hand held unit in a predetermined order with the processor 28 recording the code each time a transmission is received thereby. Alternatively, each unit can be supplied to the installer with an indication of its code and the code for each unit can be loaded manually through the keypad 47. A similar procedure is adopted when a sensor unit in a wheel is replaced or wheels are moved to new positions on the vehicle.

During installation each unit is preset to transmit information at predetermined times relative to other units. Each unit 1 is independent and whilst watch-type timers are highly accurate, the timing of transmissions as between one unit and the next can drift over a long period of time. The transmission bursts from each unit are so short that it is unlikely that transmission drift will cause interference between units. Nevertheless, the processor 28 can deal with time related drift by recording relative drift rates so that at any given time it has information about which unit will be next to transmit and when. In the unlikely event that a clash of transmissions occurs because of drift, the processor will ignore incoming data until the clash clears and will provide an indication on the display 29 that data is being ignored because of the clash. Once the clash clears normal data analysis by the processor will be resumed.

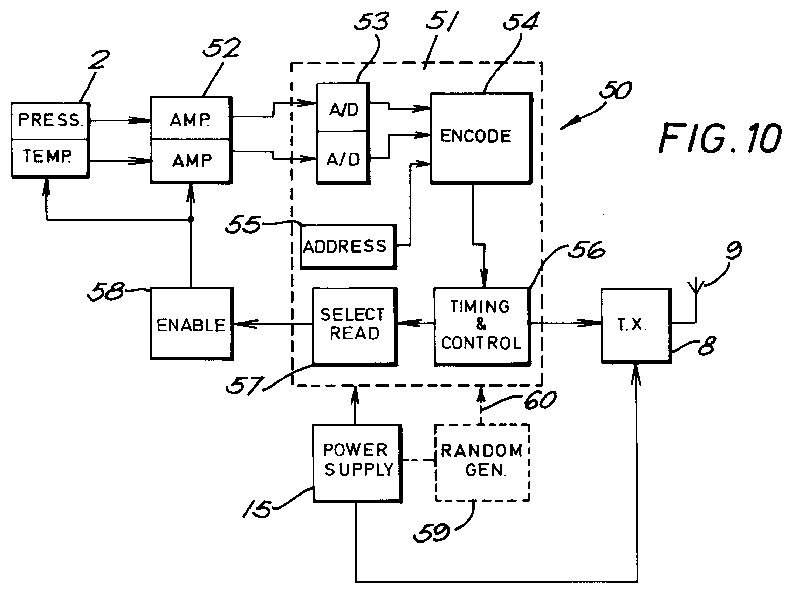

Figure 10 of the accompanying drawings shows a sensing circuit 50 which may alternatively be provided in the tyre condition sensing unit. In addition to the sensor 2, the transmitter 8, the antenna 9 and the power supply 15 which are equivalent to like-numbered units in Figure 1, the circuit comprises a signal processing and control integrated circuit 51 which receives signals from an amplifying unit 52 to which the sensor is connected.

The integrated circuit 51 is a so-called PIC16LC71 manufactured by Microchip. The circuit 51 comprises an analogue to digital (A/D) converting unit 53 containing an A/D converter for the amplified pressure signal and for the amplified temperature signal output from respective amplifiers in the amplifying unit 52. Digital pressure and temperature data from the converting unit 53 is input to an encoder 54 together with digital address data from an address register 55. The address data is preset and comprises a number which serves to identify the sensing unit. The address data therefore serves a similar purpose to the code generated by the code generator 5 in the circuit shown in Figure 1 of the drawings.

Pressure, temperature and address data input to the encoder is encoded thereby in preparation for transmission by the transmitter 8. Data is only transferred in one direction, namely from the sensing unit to a remote analysis unit, and in order to ensure that information is not lost during transmission the pressure, temperature and address data has error checking bits added to it by the encoder. Any suitable known error checking encoding technique, of which there are many, may be used although convolutional codes are preferred. Convolutional codes such as the so-called Hagelbarger code are a parity check code in which data digits alternate with check digits. This technique is well suited to the task because it was developed with the intention of dealing with errors in widely separated data bursts. Since data coding is in itself well known and is incidental to the invention it will not be described in any greater detail herein.

It should be noted that since the pressure, temperature and address data is digitally encoded there is no need for the pulse width modulation techniques of the Figure 1 circuit to be used to transmit the data. Instead, the encoded data can be placed directly onto an RF carrier for transmission to a remote receiver.

Encoded data from the encoder 54 is output to a timing and control processor 56 where it is analysed before being output to the transmitter 8. The timing and control processor 56 controls operation of the system by determining instances of time when pressure and temperature readings should be taken from the sensor 2. In some cases, for example during monitoring of a racing car tyre, it is necessary to monitor continuously for changes in pressure and temperature. In such a case the circuit 50 would be set up so that pressure and temperature readings were taken at regular intervals, say every five seconds, and the encoded data transmitted by the transmitter as soon as and each time it became available. However, such a set up will consume a large amount of power because the amplifying unit 52, the converting unit 53, the encoder 54 and the transmitter 8 require relatively large amounts of power to operate and this would quickly drain the energy from a small power source such as a lithium cell.

In most cases it is not necessary to monitor continuously for changes in tyre pressure and temperature and indeed a period of several minutes between readings will be acceptable. In such a case it is unnecessary to supply power to the sensor 2, the amplifying unit 52, the converting unit 53 and the encoder 54 except when readings are being taken for transmission. The integrated circuit 51 includes a select read output 57 which can be arranged to put the converting unit 53 and encoder 54 into a standby mode via lines (not shown) inside the integrated circuit 51. An enabling circuit 58 responsive to the select read circuit 58 is also provided for placing the amplifying unit 52 and the sensor 2 into a standby mode. In the standby mode very little or no power is supplied to these units, thereby extending considerably the life of the power cell. Power is supplied continuously to the transmitter 8 because the power consumption of this unit is low except at times when a transmission of data is forced to occur by the timing and control processor 56.

The circuit 50 remains in the standby mode for a predetermined period determined by the timing and control processor 56 and at the end of the period the processor 56 causes the select read output 57 to output enabling signals to the converting unit 53 and the encoder 54 and to the enabling unit 58 causing the same to enable the sensor 2 and the amplifying unit 52. Pressure and temperature readings are then taken from the sensor 2. The encoded pressure, temperature and address data from the encoder 54 is examined by the processor 56 before being output to the transmitter. The processor 56 can be configured to respond in several different ways to the data. If there has been a significant change in sensed pressure and/or temperature the encoded data is passed to the transmitter 8 for transmission. If the change is not only significant but also large the processor 56 can be arranged to respond by reducing the time between transmissions. If, on the other hand, there has not been a significant change the processor 56 can be arranged to respond by discarding the data so that it is not output for transmission and/or increasing the time between readings up to a predetermined maximum period which could be several minutes. The precise manner in which the processor 56 responds to the data is a detail of implementation specific to a given use. Such details are well within the scope of those possessed of the appropriate skills and therefore will not be discussed further herein.

The integrated circuit 51 comprises so-called watchdog circuits (not shown) which are provided for the purpose of resetting the integrated circuit should an error occur during the execution of a routine thereby. One feature of the watchdog circuits is the ability to place the entire integrated circuit into a standby mode in which power is supplied only to the watchdog circuits. This feature can be utilized to reduce further the power consumption of the circuit 50 in cases where very low power consumption is required. A random or pseudo random generator 59 can be connected directly to the power supply 15 and to the watchdog circuits of the integrated circuit 51 via an input line 60. The random generator 59 generates an enabling signal which is output to the line 60 at randomly spaced instances of time. The watchdog circuits can be configured to respond to the enabling signal by applying power to the timing and control processor 56 and select read output which in turn enable the remainder of the circuit 50 to enable a reading to be taken and, if appropriate, transmitted before the circuit 50 is again placed in the standby mode.

Although not shown in Figure 10, the circuit 50 may also include the monitor and override circuitry shown in Figure 1 to enable a standby mode to be overridden in the event of a sudden change in pressure or temperature or in response to external control as discussed herein above in relation to Figure 1.

The above described embodiments are of self-contained tyre condition monitoring systems. It will be appreciated that the systems can be integrated into larger analysis systems to provide information as part of an overall vehicle health monitoring system.

The systems can also be used for example to monitor the condition of tyres of vehicles, such as lorries or buses, as they leave a depot. A unit, similar to the above discussed hand held unit, placed at the exit from the depot causes the units in the wheels of the vehicle to transmit information which is analysed by a central analysis system immediately to ensure that unsafe or potentially unsafe vehicles do not leave the depot.

Having thus described the present invention by reference to preferred embodiments it is to be well understood that the embodiments in question are exemplary only and that modifications and variations such as will occur to those possessed of appropriate knowledge and skills may be made without departure from the scope of the invention as set forth in the appended claims and equivalents thereof.

## Claims

1. An apparatus for monitoring the condition of one or more tyres on a vehicle, the apparatus comprising a sensing unit (1, 50) for each of the tyres to be monitored, the sensing unit comprising a sensor (2) for outputting a signal representing at least one sensed parameter relating to the condition of the tyre, a transmitter (8) for transmitting data representing the sensed parameter at spaced time intervals, and a timing circuit (10, 11, 16, 17, 56) for defining time periods between said time intervals and for placing said sensing unit in a standby mode during said time periods,
characterised by means (18, 56) for monitoring the signal from the sensor to determine whether or not to transmit the data.

2. An apparatus as claimed in claim 1, wherein the sensing unit further comprises an oscillator (4) for generating an oscillating signal having a frequency related to the sensed parameter.

3. An apparatus as claimed in claim 2, wherein the sensing unit (1) further comprises a code generator (5) which is arranged to cooperate with said oscillator (4) to generate a predetermined unit identification code in a period of time of a duration related to the at least one sensed parameter.

4. An apparatus as claimed in claim 1, wherein the sensor (2) is for sensing two parameters.

5. An apparatus as claimed in claim 4, wherein said timing circuit comprises a full length counter (10) for counting the code output from the code generator to determine when the entire code has been transmitted and selecting means (3) responsive to said full length counter (10) for selecting one or other of said two sensed parameters.

6. An apparatus as claimed in claim 5, wherein said timing circuit further comprises a double length counter (11) for counting the code output from the code generator (5) to determine when the entire code has been transmitted for both of said two sensed parameters.

7. An apparatus as claimed in any preceding claim, wherein said timing circuit comprises a timer (16) for outputting a signal indicative of said time periods.

8. An apparatus as claimed in any preceding claim, wherein said means for monitoring the signal from the sensor comprises a monitoring circuit (18) for continuously monitoring said signal and an override circuit (19) responsive thereto for causing said transmitter (8) to be powered for transmission of data between time intervals in response to a predefined condition as sensed by said sensor (2).

9. An apparatus as claimed in any preceding claim, wherein said override circuit is further responsive to an externally generated stimulus (46).

10. An apparatus as claimed in claim 9, wherein said external stimulus is generated in a hand held unit operable by a user.

11. An apparatus as claimed in claim 1, wherein the sensing unit (50) further comprises conditioning means (52) for conditioning the signal from the sensor, converting means (53) for converting the conditioned signal into digital data representing the sensed parameter and encoding means (54) for encoding the digital data for output for transmission by the transmitter.

12. An apparatus as claimed in claim 11, wherein said means for monitoring the signal from the sensor comprises a processor (51) for processing the digital data to determine whether the data should be output for transmission.

13. An apparatus as claimed in claim 12, wherein the processor (51) is arranged to define said time periods on the basis of data representing the same parameter sensed at different instances of time.

14. An apparatus as claimed in claim 12 or 13, wherein said processor (51) is operable as said timing circuit and is arranged to cause said conditioning means, said converting means (53) and said encoding means (54) to be powered only during a time interval of duration sufficient to produce said encoded digital data.

15. An apparatus as claimed in any of claims 11 to 14, wherein the sensor (2) senses two parameters and produces two signals respectively representative thereof, the conditioning means (52), converting means (53) and encoding means (54) being operable on both signals to produce encoded digital data representing both sensed parameters.

16. An apparatus as claimed in claim 15, wherein the sensing unit (50) further comprises means (55) for supplying identity data identifying the sensing unit, said encoding means (54) being further operable on said identity data to produce encoded data representing both sensed parameters and said identity.

17. An apparatus as claimed in claim 12, wherein said converting means (53), said encoding means (54) and said processor (51) are provided in a single integrated circuit operable in a standby mode, and wherein said timing circuit comprises a random generator (59) for generating a signal to which said integrated circuit is responsive to operate.

18. An apparatus as claimed in any preceding claim, further comprising an analysis unit (24) responsive to transmissions by said sensing unit (1, 50) for analysing said data to determine the condition of the tyre.

19. An apparatus as claimed in claim 18, wherein said analysis unit comprises a data decoder (27) for decoding data in transmissions received from said sensing unit.

20. An apparatus as claimed in claim 18 or 19, wherein said analysis unit comprises processing means (28) for comparing said transmitted data with predefined data in order to determine the condition of the or each of said tyres.

21. An apparatus as claimed in claim 18, 19 or 20, wherein said analysis unit comprises a display (29) for displaying an indication of the condition of the or each of said tyres.

22. An apparatus as claimed in any of claims 18 to 21, wherein said analysis unit comprises an audible output (30) for providing an audible warning when one or more tyres is in a predetermined condition.

23. An apparatus as claimed in any of claims 18 to 22, wherein said analysis unit comprises an input device (47) for inputting data defining predetermined conditions of the or each tyre.

24. A method of monitoring the condition of a tyre fitted to a vehicle, the method comprising sensing a parameter related to the condition of the tyre, outputting a signal representing the sensed parameter, creating data representing the sensed parameter, for transmission at spaced time intervals, and defining time periods between spaced time intervals for the transmission of data,
characterised by monitoring the signal from the sensor to determine whether or not to transmit the data.

25. A method as claimed in claim 24, further comprising generating an oscillating signal at a frequency determined by the signal representing the sensed parameter and using said oscillating signal to generate a predefined code in a period of time related to the value of the sensed parameter for transmission as said data.

26. A method as claimed in claim 25, comprising sensing two parameters, generating an oscillating signal firstly at a frequency determined by the signal as representing the first of said two parameters and secondly at a frequency determined by the signal as representing the second of said two parameters and using said oscillating signal to generate said predefined code over first and second periods of time respectively related to the two sensed parameters.

27. A method as claimed in claim 24, further comprising converting the signal into digital data representative thereof for transmission.

28. A method as claimed in claim 27, further comprising processing said digital data in order to determine said defined time periods.

29. A method as claimed in claim 27 or 28, wherein the monitoring of the signal from the sensor comprises processing said digital data in order to determine whether or not to transmit said data.

30. A method as claimed in any of claims 24 to 29, further comprising transmitting data identifying the tyre being monitored.

31. A sensing device for sensing the condition of a tyre in use on a vehicle, the device comprising a sensor (2) for providing a signal representing the condition of the tyre, signal processing circuitry (4, 5, 8, 52, 53, 54) for conditioning the signal from the sensor for transmission, and a power supply (15) arranged to power said signal processing circuitry for transmission of said processed signal at predefined intervals,
characterised by monitoring means (18, 56) for monitoring the signal from the sensor for a change in the condition of the tyre sensed thereby, and
in that the power supply is further arranged to power said signal processing circuitry for transmission in response to said monitoring means detecting a predetermined change in the condition of the tyre.

32. A sensing device as claimed in claim 31, wherein said power supply comprises a timer (16) for activating the same from time to time and the processing circuitry (4, 5, 8, 52, 53, 54) is arranged to deactivate said supply once said processed signal has been transmitted.

33. A sensing device as claimed in claim 31 or 32, wherein said processing circuitry (4, 5, 8, 52, 53, 54) is arranged to generate a code in a period of time determined by the signal representing the condition of the tyre, which code is transmitted as said processed signal.

34. A sensing device as claimed in claim 31 or 32 or 33, wherein the signal from said sensor (2) selectively represents either the pressure or temperature of said tyre, the device comprising means (3) for selecting either said pressure or said temperature related signal for processing by said signal processing circuitry.

35. A sensing device as claimed in any of claims 31 to 34, wherein the monitoring means comprise a monitor circuit (18) for continuously monitoring said signal from said sensor and for activating said power supply (15) when the predetermined condition is sensed.

36. A transducer for monitoring the condition of a tyre, the transducer comprising sensing means (2) for sensing at least one parameter representing the condition of the tyre, code generating means (5) for generating a preselected code, oscillating means (4) responsive to said sensing means for generating a signal that oscillates at a frequency relating to the value of the sensed parameter, the code generating means (5) and the oscillating means (4) cooperating such that said preselected code is generated over a period of time representative of the value of the sensed parameter, and a timed power supply (15) arranged to power said code generating means (5) and, said oscillating means (4) such that said code is only generated from time to time, characterised by monitoring means (18) for continuously monitoring said sensing means and for overriding said power supply such that power is supplied to said code generating means (5) and said oscillating means (4) when a predetermined condition is sensed by said sensing means.

37. A transducer as claimed in claim 36, wherein the sensing means (2) is arranged to sense two parameters, and the code generating means (5) and the oscillating means (4) cooperate to generate said preselected code twice, the period of time taken to generate the code the first time representing the value of one sensed parameter and the period of time taken to generate the code the second time representing the value of the other sensed parameter.

38. A transducer as claimed in claim 36 or 37, further comprising transmitting means (8) powered by said power supply for transmitting said generated code.

39. A transducer as claimed in claim 38, wherein said transmitting means (8) is arranged to transmit said code as a radio signal.

40. A transducer as claimed in any of claims 36 to 39, wherein said power supply comprises timing means (16) for connecting said supply (15) from time to time.

41. A transducer as claimed in any of claims 36 to 40 further comprising control means (10, 11) responsive to the code generating means (5) for isolating said power supply (15) once said code has been transmitted.

42. A transducer as claimed in any of claims 36 to 41, wherein said monitoring means (18) comprises means (19) responsive to an external stimulus for overriding said power supply.

43. A transducer as claimed in claim 38 or 39 wherein said transmitting means comprises a surface acoustic wave transmitter (8).

44. A transducer as claimed in claim 38, 39 or 43, wherein said transmitting means comprises summing means (45) having one input connected to said oscillating means (4) and another input connected to said code generating means (5) so that the output from the oscillating means (4) is modulated by the output from the code generator (5).

45. A transducer for monitoring the condition of a tyre, the transducer comprising sensing means (2) for sensing at least one parameter representing the condition of the tyre, converting means (53) for converting the sensed parameter into digital data representative thereof, encoding means (54) for encoding the digital data for transmission, and timing means (56) for defining spaced time intervals in which said parameter is sensed and said data is encoded for transmission and for causing power to be removed from said converting means (53) and said encoding means (54) during periods of time between said spaced intervals,
characterised by monitoring means (56) for monitoring the digital data to determine whether or not to transmit the data.

46. A transducer as claimed in claim 45, wherein said processing means (28) and said timing means (56) are arranged to cooperate to define said periods of time depending on the relationship between data representing the same parameter sensed at different instances of time.

47. A transducer as claimed in claim 45 or 46, wherein the sensing means (2) is arranged to sense two parameters and to produce two signals respectively representative thereof, the converting means (53) and the encoding means (54) being operable on both signals to produce encoded digital data representing both sensed parameters.

48. A transducer as claimed in claim 47, further comprising means (55) for supplying identity data identifying the transducer, said encoding means (54) being further operable on said identity data to produce encoded data representing both sensed parameters and said identity.

## Patentansprüche

1. Vorrichtung zur Überwachung des Zustands eines oder mehrerer Reifen an einem Fahrzeug, mit einer Erfassungseinheit (1, 50) für jeden der zu überwachenden Reifen, die einen Sensor (2) zur Ausgabe eines Signals, das mindestens einen den Reifenzustand betreffenden erfaßten Parameter darstellt, einen Übertrager (8) zur Übertragung von Daten, die den erfaßten Parameter darstellen, zu mit Abstand voneinander angeordneten Zeitintervallen und eine Zeitgeberschaltung (10, 11, 16, 17, 56), um Zeitspannen zwischen den genannten Zeitintervallen festzulegen und in diesen Zeitspannen die Erfassungseinheit in einen Bereitschaftsmodus zu setzen, aufweist,
**gekennzeichnet** durch eine Einrichtung (18, 56) zur Überwachung des Signals von dem Sensor, um zu bestimmen, ob die Daten übertragen werden sollen.

2. Vorrichtung nach Anspruch 1, wobei die Erfassungseinheit außerdem einen Oszillator (4) zur Erzeugung eines Schwingungssignals mit einer auf den erfaßten Parameter bezogenen Frequenz aufweist.

3. Vorrichtung nach Anspruch 2, wobei die Erfassungseinheit (1) außerdem einen Codegenerator (5) aufweist, der in Zusammenarbeit mit dem Oszillator (4) eingerichtet ist, in einer Zeitspanne, deren Dauer sich auf den mindestens einen erfaßten Parameter bezieht, einen vorbestimmten Einheiten-Identifikationscode zu erzeugen.

4. Vorrichtung nach Anspruch 1, wobei der Sensor (2) zur Erfassung zweier Parameter eingerichtet ist.

5. Vorrichtung nach Anspruch 4, wobei die Zeitgeberschaltung einen Voll-Längenzähler (10), um die Codeausgabe des Codegenerators zu zählen und zu bestimmen, wann der gesamte Code übertragen wurde, und eine auf den Voll-Längenzähler (10) ansprechende Auswahleinrichtung (3) zur Auswahl des einen oder des anderen der beiden erfaßten Parameter aufweist.

6. Vorrichtung nach Anspruch 5, wobei die Zeitgeberschaltung außerdem einen Doppellängenzähler (11) zum Zählen der Codeausgabe des Codegenerators (5) aufweist, um zu bestimmen, wann der gesamte Code für beide erfaßten Parameter übertragen worden ist.

7. Vorrichtung nach einem der vorhergehenden Ansprüche, wobei die Zeitgeberschaltung einen Zeitgeber (16) zur Ausgabe eines die genannten Zeitspannen angebenden Signals aufweist.

8. Vorrichtung nach einem der vorhergehenden Ansprüche, wobei die Einrichtung zur Überwachung des Signals von dem Sensor eine Überwachungsschaltung (18) zur fortlaufenden Überwachung des Signals und eine auf diese ansprechende Vorrangschaltung (19), die bewirkt, daß der Übertrager in Reaktion auf einen von dem Sensor (2) erfaßten vorbestimmten Zustand zwischen den Zeitintervallen zur Datenübertragung betrieben wird, umfaßt.

9. Vorrichtung nach einem der vorhergehenden Ansprüche, wobei die Vorrangschaltung außerdem auf einen extern erzeugten Reiz (46) anspricht.

10. Vorrichtung nach Anspruch 9, wobei der externe Reiz in einem von einem Benutzer bedienbaren Handapparat erzeugt wird.

11. Vorrichtung nach Anspruch 1, wobei die Erfassungseinheit (50) außerdem eine Aufbereitungseinrichtung (52) zur Aufbereitung des Signals des Sensors, eine Umwandlungseinrichtung (53) zur Umwandlung des aufbereiteten Signals in digitale Daten, die den erfaßten Parameter darstellen, und eine Codiereinrichtung (54) zur Codierung der digitalen Daten für die Ausgabe zur Übertragung durch den Übertrager umfaßt.

12. Vorrichtung nach Anspruch 11, wobei die Einrichtung zur Überwachung des Signals des Sensors einen Prozessor (51) zur Verarbeitung der digitalen Daten aufweist, um zu bestimmen, ob die Daten zur Übertragung ausgegeben werden sollen.

13. Vorrichtung nach Anspruch 12, wobei der Prozessor (51) auf der Grundlage von Daten, die den zu unterschiedlichen Zeitpunkten erfaßten gleichen Parameter darstellen, die genannten Zeitspannen festlegen kann.

14. Vorrichtung nach Anspruch 12 oder 13, wobei der Prozessor (51) als die genannte Zeitgeberschaltung betrieben werden kann und bewirken kann, daß die Aufbereitungseinrichtung, die Umwandlungseinrichtung (53) und die Codiereinrichtung (54) lediglich während eines Zeitintervalls betrieben werden, dessen Dauer ausreichend ist, die genannten codierten digitalen Daten zu erzeugen.

15. Vorrichtung nach einem der Ansprüche 11 bis 14, wobei der Sensor (2) zwei Parameter erfaßt und zwei entsprechende die Parameter darstellende Signale erzeugt und wobei die Aufbereitungseinrichtung (52), die Umwandlungseinrichtung (53) und die Codiereinrichtung (54) mit beiden Signalen arbeiten können, um codierte digitale Daten zu erzeugen, die beide erfaßten Parameter darstellen.

16. Vorrichtung nach Anspruch 15, wobei die Erfassungseinheit (50) außerdem eine Einrichtung (55) zur Lieferung von Identifikationsdaten, die die Erfassungseinheit identifizieren, aufweist und die Codiereinrichtung (54) mit den Identifikationsdaten betrieben werden kann, um codierte Daten zu erzeugen, die beide erfaßten Parameter und die Identifikation darstellen.

17. Vorrichtung nach Anspruch 12, wobei die Umwandlungseinrichtung (53), die Codiereinrichtung (54) und der Prozessor (51) in einer einzigen, in einem Bereitschaftsmodus betreibbaren integrierten Schaltung vorgesehen sind und die Zeitgeberschaltung einen Zufallsgenerator (59) zur Erzeugung eines Signals aufweist, aufgrund dessen die integrierte Schaltung arbeitet.

18. Vorrichtung nach einem der vorhergehenden Ansprüche, mit einer Auswertungseinheit (24), die unter Auswertung der genannten Daten zur Bestimmung des Reifenzustands auf die Übertragungen von der Erfassungseinheit (1, 50) anspricht.

19. Vorrichtung nach Anspruch 18, wobei die Auswertungseinheit einen Datendecoder (27) zur Decodierung von in den von der Erfassungseinheit empfangenen Übertragungen enthaltenen Daten beinhaltet.

20. Vorrichtung nach Anspruch 18 oder 19, wobei die Auswertungseinheit eine Verarbeitungseinrichtung (28) umfaßt, um zur Bestimmung des Zustands des bzw. der jeweiligen Reifen die übertragenen Daten mit vorbestimmten Daten zu vergleichen.

21. Vorrichtung nach Anspruch 18, 19 oder 20, wobei die Auswertungseinheit eine Anzeige (29) aufweist, um eine Angabe des Zustands des bzw. der jeweiligen Reifen anzuzeigen.

22. Vorrichtung nach einem der Ansprüche 18 bis 21, wobei die Auswertungseinheit eine akustische Ausgabe aufweist, um eine akustische Warnung zu liefern, wenn sich einer oder mehrere Reifen in einem bestimmten Zustand befinden.

23. Vorrichtung nach einem der Ansprüche 18 bis 22, wobei die Auswertungseinheit eine Eingabeeinrichtung (47) zur Eingabe von Daten aufweist, die vorbestimmte Zustände für den bzw. die jeweiligen Reifen festlegen.

24. Verfahren zur Überwachung des Zustands eines an einem Fahrzeug montierten Reifens, mit: dem Erfassen eines den Reifenzustand betreffenden Parameters, dem Ausgeben eines den erfaßten Parameter darstellenden Signals, dem Erzeugen von Daten, die den erfaßten Parameter darstellen, zur Übertragung zu mit Abstand voneinander angeordneten Zeitintervallen und mit dem Festlegen von Zeitspannen zwischen den mit Abstand angeordneten Zeitintervallen für die Übertragung von Daten,
**gekennzeichnet** durch das Überwachen des Signals von dem Sensor, um zu bestimmen, ob die Daten übertragen werden sollen.

25. Verfahren nach Anspruch 24, mit dem Erzeugen eines Schwingungssignals einer Frequenz, die von dem den erfaßten Parameter darstellenden Signal bestimmt wird, und dem Verwenden des Schwingungssignals, um in einer Zeitspanne, die sich auf den Wert des erfaßten Parameters bezieht, einen vorbestimmten Code zu erzeugen und ihn als die genannten Daten zu übertragen.

26. Verfahren nach Anspruch 25, mit dem Erfassen zweier Parameter, dem Erzeugen eines Schwingungssignals mit zunächst einer Frequenz, die von dem den ersten der beiden Parameter darstellenden Signal bestimmt wird und dann einer Frequenz, die von dem den zweiten der genannten beiden Parameter darstellenden Signal bestimmt wird, und Verwenden des Schwingungssignals zur Erzeugung des genannten vorbestimmten Codes über eine erste und eine zweite Zeitspanne, die sich entsprechenderweise auf die zwei erfaßten Parameter beziehen.

27. Verfahren nach Anspruch 24, mit dem Umwandeln des Signals zur Übertragung in digitale Daten, die das Signal darstellen.

28. Verfahren nach Anspruch 27, mit dem Verarbeiten der digitalen Daten, um die festgelegten Zeitspannen zu bestimmen.

29. Verfahren nach Anspruch 27 oder 28, wobei das Überwachen des Signals von dem Sensor das Verarbeiten der digitalen Daten zur Bestimmung, ob die Daten übertragen werden sollen, umfaßt.

30. Verfahren nach einem der Ansprüche 24 bis 29, mit dem Übertragen von Daten, die den überwachten Reifen identifizieren.

31. Erfassungsvorrichtung zur Erfassung des Zustands eines an einem Fahrzeug verwendeten Reifens, mit einem Sensor (2) zur Lieferung eines den Reifenzustand darstellenden Signals, einer Signalverarbeitungsschaltung (4, 5, 8, 52, 53, 54) zur Aufbereitung des Signals von dem Sensor für eine Übertragung, und einer Stromversorgung (15), um die Signalverarbeitungsschaltung zu vorbestimmten Intervallen für die Übertragung des verarbeiteten Signals zu betreiben,
**gekennzeichnet**
durch eine Überwachungseinrichtung (18, 56) zur Überwachung des Signals von dem Sensor im Hinblick auf eine Änderung des dadurch erfaßten Reifenzustands, und
dadurch, daß die Stromversorgung eingerichtet ist, die Signalverarbeitungsschaltung in Reaktion darauf, daß die Überwachungseinrichtung eine vorbestimmte Änderung des Reifenzustands erfaßt, für die Übertragung zu betreiben.

32. Vorrichtung nach Anspruch 31, wobei die Stromversorgung einen Zeitgeber (16) aufweist, um diese von Zeit zu Zeit in Betrieb zu setzen, und die Verarbeitungsschaltung (4, 5, 8, 52, 53, 54) eingerichtet ist, die Versorgung außer Betrieb zu setzen, sobald das verarbeitete Signal übertragen worden ist.

33. Vorrichtung nach Anspruch 31 oder 32, wobei die Verarbeitungsschaltung (4, 5, 8, 52, 53, 54) eingerichtet ist, in einer Zeitspanne, die von dem den Reifenzustand darstellenden Signal bestimmt wird, einen Code zu erzeugen, der als das genannte verarbeitete Signal übertragen wird.

34. Vorrichtung nach Anspruch 31, 32 oder 33, wobei das Signal von dem Sensor wahlweise entweder den Druck oder die Temperatur des Reifens darstellt und die Vorrichtung eine Einrichtung (33) zur Auswahl entweder des sich auf den Druck oder die Temperatur beziehenden Signals zur Verarbeitung durch die Signalverarbeitungsschaltung aufweist.

35. Vorrichtung nach einem der Ansprüche 31 bis 34, wobei die Verarbeitungseinrichtung eine Überwachungsschaltung (18) aufweist, um das Signal von dem Sensor fortlaufend zu überwachen und die Stromversorgung (15) in Betrieb zu setzen, wenn der vorbestimmte Zustand erfaßt wird.

36. Meßgrößenwandler zur Überwachung des Zustands eines Reifens, mit einer Erfassungseinrichtung (2) zur Erfassung mindestens eines den Reifenzustand darstellenden Parameters, einer Codeerzeugungseinrichtung (5) zur Erzeugung eines vorgewählten Codes, einer Schwingungseinrichtung (4), die zur Erzeugung eines mit einer Frequenz, die sich auf den Wert des erfaßten Parameters bezieht, schwingenden Signals auf die Erfassungseinrichtung anspricht, wobei die Codeerzeugungseinrichtung (5) und die Schwingungseinrichtung (4) so zusammenarbeiten, daß der vorgewählte Code über eine Zeitspanne erzeugt wird, die den Wert des erfaßten Parameters darstellt, und mit einer zeitgesteuerten Stromversorgung (15), die eingerichtet ist, die Codeerzeugungseinrichtung (5) und die Schwingungseinrichtung (4) so zu betreiben, daß der Code lediglich von Zeit zu Zeit erzeugt wird,
**gekennzeichnet** durch eine Überwachungseinrichtung (18) zur fortlaufenden Überwachung der Erfassungseinrichtung und zur vorrangigen Ansteuerung der Stromversorgung, so daß die Codeerzeugungseinrichtung (5) und die Schwingungseinrichtung (4) mit Strom versorgt werden, wenn von der Erfassungseinrichtung ein vorbestimmter Zustand erfaßt wird.

37. Wandler nach Anspruch 36, wobei die Erfassungseinrichtung (2) eingerichtet ist, zwei Parameter zu erfassen und die Codeerzeugungseinrichtung (5) sowie die Schwingungseinrichtung (4) unter zweimaliger Erzeugung des vorgewählten Codes zusammenarbeiten, wobei die zur erstmaligen Erzeugung des Codes genommene Zeitspanne den Wert eines erfaßten Parameters und die zur zweiten Erzeugung des Codes genommene Zeitspanne den Wert des anderen erfaßten Parameters darstellt.

38. Wandler nach Anspruch 36 oder 37, mit einer Übertragungseinrichtung (8), die von der Stromversorgung zur Übertragung des erzeugten Codes betrieben wird.

39. Wandler nach Anspruch 38, wobei die Übertragungseinrichtung (8) eingerichtet ist, den genannten Code als Funksignal zu übertragen.

40. Wandler nach einem der Ansprüche 36 bis 39, wobei die Stromversorgung eine Zeitgebereinrichtung (16) aufweist, um die Versorgung (15) von Zeit zu Zeit anzuschließen.

41. Wandler nach einem der Ansprüche 36 bis 40, mit einer Steuereinrichtung (10, 11), die auf die Codeerzeugungseinrichtung (5) anspricht, um die Stromversorgung (15) abzuklemmen, sobald der Code übertragen worden ist.

42. Wandler nach einem der Ansprüche 36 bis 41, wobei die Überwachungseinrichtung (18) eine Einrichtung (19) aufweist, die auf einen externen Reiz anspricht, um die Stromversorgung vorrangig zu steuern.

43. Wandler nach Anspruch 38 oder 39, wobei die Übertragungseinrichtung einen akustischen Oberflächenwellen-Übertrager (8) aufweist.

44. Wandler nach Anspruch 38, 39 oder 43, wobei die Übertragungseinrichtung eine Summenbildungseinrichtung (45) mit einem mit der Schwingungseinrichtung (4) verbundenen einen Eingang und einem mit der Codeerzeugungseinrichtung (5) verbundenen anderen Eingang aufweist, wobei die Ausgabe der Schwingungseinrichtung (4) von der Ausgabe des Codeerzeugers (5) moduliert wird.

45. Meßgrößenwandler zur Überwachung des Zustands eines Reifens, mit einer Erfassungseinrichtung (2) zur Erfassung mindestens eines den Zustand des Reifens darstellenden Parameters, einer Umwandlungseinrichtung (53) zur Umwandlung des erfaßten Parameters in digitale Daten, die diesen darstellen, einer Codiereinrichtung (54) zur Codierung der digitalen Daten für eine Übertragung, und einer Zeitgebereinrichtung (56), um mit Abstand angeordnete Zeitintervalle festzulegen, in denen der Parameter erfaßt und die Daten zur Übertragung codiert werden, und um zu bewirken, daß während Zeitspannen zwischen den genannten mit Abstand angeordneten Zeitintervallen Strom von der Umwandlungseinrichtung (53) und der Codiereinrichtung (54) weggenommen wird,
**gekennzeichnet** durch eine Überwachungseinrichtung (56), um die digitalen Daten zu überwachen und zu bestimmen, ob die Daten übertragen werden sollen.

46. Wandler nach Anspruch 45, wobei die Verarbeitungseinrichtung (28) und die Zeitgebereinrichtung (56) zur Zusammenarbeit eingerichtet sind, um die genannten Zeitspannen in Abhängigkeit von der Beziehung zwischen Daten, die den zu unterschiedlichen Zeitpunkten erfaßten gleichen Parameter darstellen, festzulegen.

47. Wandler nach Anspruch 45 oder 46, wobei die Erfassungseinrichtung (2) eingerichtet ist, zwei Parameter zu erfassen und zwei entsprechende die Parameter darstellende Signale zu erzeugen und wobei die Umwandlungseinrichtung (53) und die Codiereinrichtung (54) mit beiden Signalen arbeiten können, um codierte digitale Daten zu erzeugen, die beide erfaßten Parameter darstellen.

48. Wandler nach Anspruch 47, mit einer Einrichtung (55) zur Lieferung von Identifizierungsdaten zur Identifizierung des Wandlers, wobei die Codiereinrichtung (54) anhand der Identifizierungsdaten codierte Daten erzeugen kann, die beide erfaßten Parameter und die genannte Identifizierung darstellen.

## Revendications

1. Appareil pour contrôler l'état d'un ou de plusieurs pneus sur un véhicule, l'appareil comprenant une unité de détection (1, 50) pour chacun des pneus à contrôler, l'unité de détection comprenant un détecteur (2) pour sortir un signal représentant au moins un paramètre détecté relatif à l'état du pneu, un émetteur (8) pour émettre des données représentant le paramètre détecté à des intervalles de temps espacés, et un circuit de synchronisation (10, 11, 16, 17, 56) pour définir des périodes de temps entre lesdits intervalles de temps et pour placer ladite unité de détection dans un mode d'attente pendant lesdites périodes de temps,
caractérisé par des moyens (18, 56) pour contrôler le signal en provenance du détecteur pour déterminer s'il faut ou non émettre les données.

2. Appareil selon la revendication 1, dans lequel l'unité de détection comprend de plus un oscillateur (4) pour produire un signal d'oscillation ayant une fréquence relative au paramètre détecté.

3. Appareil selon la revendication 2, dans lequel l'unité de détection (1) comprend de plus un générateur de code (5) qui est conçu pour contribuer avec ledit oscillateur (4) à produire un code prédéterminé d'identification d'unité dans une période de temps d'une durée relative à l'au moins un paramètre détecté.

4. Appareil selon la revendication 1, dans lequel le détecteur (2) sert à détecter deux paramètres.

5. Appareil selon la revendication 4, dans lequel ledit circuit de synchronisation comprend un compteur de longueur totale (10) pour compter le code issu du générateur de code pour déterminer le moment où le code tout entier a été transmis et des moyens de sélection (3) sensibles audit compteur de longueur totale (10) pour sélectionner l'un ou l'autre desdits deux paramètres détectés.

6. Appareil selon la revendication 5, dans lequel ledit circuit de synchronisation comprend de plus un compteur à double longueur (11) pour compter le code issu du générateur de code (5) pour déterminer le moment où le code tout entier a été transmis pour l'ensemble desdits deux paramètres détectés.

7. Appareil selon l'une quelconque des revendications précédentes, dans lequel ledit circuit de synchronisation comprend une minuterie (16) pour sortir un signal indicatif desdites périodes de temps.

8. Appareil selon l'une quelconque des revendications précédentes, dans lequel lesdits moyens pour contrôler le signal en provenance du détecteur comprennent un circuit de contrôle (18) pour contrôler en permanence ledit signal et un circuit prioritaire (19) sensible à ce dernier pour obliger ledit émetteur (8) à être alimenté pour l'émission de données entre des intervalles de temps, en réponse à un état prédéfini quand il est détecté par ledit détecteur (2).

9. Appareil selon l'une quelconque des revendications précédentes, dans lequel ledit circuit prioritaire est en outre sensible à un stimulus produit de façon externe (46).

10. Appareil selon la revendication 9, dans lequel ledit stimulus externe est produit dans une unité tenue à la main, pouvant être mise en oeuvre par un utilisateur.

11. Appareil selon la revendication 1, dans lequel l'unité de détection (50) comprend de plus des moyens de mise en forme (52) pour mettre en forme le signal en provenance du détecteur, des moyens de transformation (53) pour transformer le signal mis en forme en données numériques représentant le paramètre détecté et des moyens de codage (54) pour coder les données numériques à sortir pour une émission par l'émetteur.

12. Appareil selon la revendication 11, dans lequel lesdits moyens pour contrôler le signal en provenance du détecteur comprennent un processeur (51) pour traiter les données numériques pour déterminer si les données devraient être sorties pour une émission.

13. Appareil selon la revendication 12, dans lequel le processeur (51) est conçu pour définir lesdites périodes de temps sur la base des données représentant le même paramètre détecté à différents instants dans le temps.

14. Appareil selon la revendication 12 ou 13, dans lequel ledit processeur (51) peut être mis en oeuvre en tant que dit circuit de synchronisation et est conçu pour obliger lesdits moyens de mise en forme, lesdits moyens de transformation (53) et lesdits moyens de codage (54) à être alimentés seulement pendant un intervalle de temps d'une durée suffisante pour produire lesdites données numériques codées.

15. Appareil selon l'une quelconque des revendications 11 à 14, dans lequel le détecteur (2) détecte deux paramètres et produit deux signaux respectivement représentatifs de ces derniers, les moyens de mise en forme (52), les moyens de transformation (53) et les moyens de codage (54) pouvant être mis en oeuvre sur les deux signaux pour produire des données numériques codées représentant les deux paramètres détectés.

16. Appareil selon la revendication 15, dans lequel l'unité de détection (50) comprend de plus des moyens (55) pour fournir des données d'identité identifiant l'unité de détection, lesdits moyens de codage (54) pouvant de plus être mis en oeuvre sur lesdites données d'identité pour produire des données codées représentant les deux paramètres détectés et ladite identité.

17. Appareil selon la revendication 12, dans lequel lesdits moyens de transformation (53), lesdits moyens de codage (54) et ledit processeur (51) sont disposés dans un unique circuit intégré pouvant être mis en oeuvre dans un mode d'attente, et dans lequel ledit circuit de synchronisation comprend un générateur aléatoire (59) pour produire un signal auquel ledit circuit intégré est sensible pour fonctionner.

18. Appareil selon l'une quelconque des revendications précédentes, comprenant de plus une unité d'analyse (24) sensible aux émissions de ladite unité de détection (1, 50) pour analyser lesdites données pour déterminer l'état du pneu.

19. Appareil selon la revendication 18, dans lequel ladite unité d'analyse comprend un décodeur de données (27) pour décoder les données dans les émissions reçues en provenance de ladite unité de détection.

20. Appareil selon la revendication 18 ou 19, dans lequel ladite unité d'analyse comprend des moyens de traitement (28) pour comparer lesdites données émises à des données prédéfinies afin de déterminer l'état du pneu ou de chacun desdits pneus.

21. Appareil selon la revendication 18, 19 ou 20, dans lequel ladite unité d'analyse comprend un dispositif d'affichage (29) pour afficher une indication de l'état du pneu ou de chacun desdits pneus.

22. Appareil selon l'une quelconque des revendications 18 à 21, dans lequel ladite unité d'analyse comprend une sortie audible (30) pour donner un avertissement audible quand un ou plusieurs pneus sont dans un état prédéterminé.

23. Appareil selon l'une quelconque des revendications 18 à 22, dans lequel ladite unité d'analyse comprend un dispositif d'entrée (47) pour entrer des données définissant les états prédéterminés de chaque pneu.

24. Procédé de contrôle de l'état d'un pneu monté sur un véhicule, le procédé comprenant la détection d'un paramètre relatif à l'état du pneu, la sortie d'un signal représentant le paramètre détecté, la création de données représentant le paramètre détecté, pour une émission à des intervalles de temps espacés, et la définition de périodes de temps entre les intervalles de temps espacés pour l'émission de données,
caractérisé par le contrôle du signal en provenance du détecteur pour déterminer s'il faut ou non émettre les données.

25. Procédé selon la revendication 24, comprenant de plus la production d'un signal d'oscillation à une fréquence déterminée par le signal représentant le paramètre détecté et l'utilisation dudit signal d'oscillation pour produire un code prédéfini dans une période de temps relative à la valeur du paramètre détecté pour l'émission en tant que dites données.

26. Procédé selon la revendication 25, comprenant la détection de deux paramètres, la production d'un signal d'oscillation, premièrement à une fréquence déterminée par le signal comme représentant le premier desdits deux paramètres et deuxièmement à une fréquence déterminée par le signal comme représentant le second desdits deux paramètres et l'utilisation dudit signal d'oscillation pour produire ledit code prédéfini sur des première et seconde périodes de temps respectivement relatives aux deux paramètres détectés.

27. Procédé selon la revendication 24, comprenant de plus la transformation du signal en données numériques représentatives de ce dernier pour l'émission.

28. Procédé selon la revendication 27, comprenant de plus le traitement desdites données numériques afin de déterminer lesdites périodes de temps définies.

29. Procédé selon la revendication 27 ou 28, dans lequel le contrôle du signal en provenance du détecteur comprend le traitement desdites données numériques afin de déterminer s'il faut ou non émettre lesdites données.

30. Procédé selon l'une quelconque des revendications 24 à 29, comprenant de plus l'émission de données identifiant le pneu en train d'être contrôlé.

31. Dispositif de détection pour détecter l'état d'un pneu en utilisation sur un véhicule, le dispositif comprenant un détecteur (2) pour donner un signal représentant l'état du pneu, des circuits de traitement de signal (4, 5, 8, 52, 53, 54) pour mettre en forme le signal en provenance du détecteur pour l'émission, et une alimentation en courant (15) conçue pour alimenter lesdits circuits de traitement de signal pour l'émission dudit signal traité à des intervalles prédéfinis,
caractérisé par des moyens de contrôle (18, 56) pour contrôler le signal en provenance du détecteur dans l'attente d'un changement de l'état du pneu détecté par ce dernier, et
en ce que l'alimentation en courant est conçue, de plus, pour alimenter lesdits circuits de traitement de signal pour une émission en réponse auxdits moyens de contrôle détectant un changement prédéterminé de l'état du pneu.

32. Dispositif de détection selon la revendication 31, dans lequel ladite alimentation en courant comprend une minuterie (16) pour activer cette dernière de temps en temps, et dans lequel les circuits de traitement (4, 5, 8, 52, 53, 54) sont conçus pour désactiver ladite alimentation une fois que ledit signal traité a été émis.

33. Dispositif de détection selon la revendication 31 ou 32, dans lequel lesdits circuits de traitement (4, 5, 8, 52, 53, 54) sont conçus pour produire un code dans une période de temps déterminée par le signal représentant l'état du pneu, lequel code est transmis en tant que dit signal traité.

34. Dispositif de détection selon la revendication 31 ou 32 ou 33, dans lequel le signal en provenance dudit détecteur (2) représente, de manière sélective, soit la pression, soit la température dudit pneu, le dispositif comprenant des moyens (3) pour sélectionner le signal relatif soit à ladite pression, soit à ladite température, pour un traitement par lesdits circuits de traitement de signal.

35. Dispositif de détection selon l'une quelconque des revendications 31 à 34, dans lequel les moyens de contrôle comprennent un circuit de contrôle (18) pour contrôler en permanence ledit signal en provenance dudit détecteur et pour activer ladite alimentation en courant (15) lorsque l'état prédéterminé est détecté.

36. Transducteur pour contrôler l'état d'un pneu, le transducteur comprenant des moyens de détection (2) pour détecter au moins un paramètre représentant l'état du pneu, des moyens de production de code (5) pour produire un code présélectionné, des moyens d'oscillation (4) sensibles auxdits moyens de détection pour produire un signal qui oscille à une fréquence relative à la valeur du paramètre détecté, les moyens de production de code (5) et les moyens d'oscillation (4) fonctionnant ensemble de sorte que ledit code présélectionné est produit sur une période de temps représentative de la valeur du paramètre détecté, et une alimentation en courant synchronisée (15) conçue pour alimenter lesdits moyens de production de code (5) et lesdits moyens d'oscillation (4) de sorte que ledit code est seulement produit de temps en temps,
caractérisé par des moyens de contrôle (18) pour contrôler en permanence lesdits moyens de détection et pour outrepasser ladite alimentation en courant de sorte que le courant est fourni auxdits moyens de production de code (5) et auxdits moyens d'oscillation (4) quand un état prédéterminé est détecté par lesdits moyens de détection.

37. Transducteur selon la revendication 36, dans lequel les moyens de détection (2) sont conçus pour détecter deux paramètres, et dans lequel les moyens de production de code (5) et les moyens d'oscillation (4) fonctionnent ensemble pour produire deux fois ledit code présélectionné, la période de temps prise pour produire le code la première fois représentant la valeur d'un paramètre détecté, et la période de temps prise pour produire le code la seconde fois représentant la valeur de l'autre paramètre détecté.

38. Transducteur selon la revendication 36 ou 37, comprenant de plus des moyens d'émission (8) alimentés par ladite alimentation en courant pour émettre ledit code produit.

39. Transducteur selon la revendication 38, dans lequel lesdits moyens d'émission (8) sont conçus pour émettre ledit code en tant que signal radio.

40. Transducteur selon l'une quelconque des revendications 36 à 39, dans lequel ladite alimentation en courant comprend des moyens de synchronisation (16) pour connecter ladite alimentation (15) de temps en temps.

41. Transducteur selon l'une quelconque des revendications 36 à 40, comprenant de plus des moyens de commande (10, 11) sensibles aux moyens de production de code (5) pour isoler ladite alimentation en courant (15) une fois que ledit code a été transmis.

42. Transducteur selon l'une quelconque des revendications 36 à 41, dans lequel lesdits moyens de contrôle (18) comprennent des moyens (19) sensibles à un stimulus externe pour outrepasser ladite alimentation en courant.

43. Transducteur selon la revendication 38 ou 39, dans lequel lesdits moyens d'émission comprennent un émetteur à ondes de surface (8).

44. Transducteur selon la revendication 38, 39 ou 43, dans lequel lesdits moyens d'émission comprennent des moyens de sommation (45) ayant une entrée reliée auxdits moyens d'oscillation (4) et une autre entrée reliée auxdits moyens de production de code (5) de sorte que la sortie en provenance des moyens d'oscillation (4) est modulée par la sortie en provenance du générateur de code (5).

45. Transducteur pour contrôler l'état d'un pneu, le transducteur comprenant des moyens de détection (2) pour détecter au moins un paramètre représentant l'état du pneu, des moyens de transformation (53) pour transformer le paramètre détecté en données numériques représentatives de ce dernier, des moyens de codage (54) pour coder les données numériques pour une émission, et des moyens de synchronisation (56) pour définir des intervalles de temps espacés dans lesquels ledit paramètre est détecté et dans lesquels lesdites données sont codées pour une émission, et pour provoquer l'enlèvement du courant desdits moyens de transformation (53) et desdits moyens de codage (54) pendant les périodes de temps entre lesdits intervalles espacés,
caractérisé par des moyens de contrôle (56) pour contrôler les données numériques pour déterminer s'il faut ou non émettre les données.

46. Transducteur selon la revendication 45, dans lequel lesdits moyens de traitement (28) et lesdits moyens de synchronisation (56) sont conçus pour coopérer pour définir lesdites périodes de temps en fonction de la relation entre des données représentant le même paramètre détecté à différents instants de temps.

47. Transducteur selon la revendication 45 ou 46, dans lequel les moyens de détection (2) sont conçus pour détecter deux paramètres et pour produire deux signaux respectivement représentatifs de ces derniers, les moyens de transformation (53) et les moyens de codage (54) pouvant être mis en oeuvre sur les deux signaux pour produire des données numériques codées représentant les deux paramètres détectés.

48. Transducteur selon la revendication 47, comprenant de plus des moyens (55) pour fournir des données d'identité identifiant le transducteur, lesdits moyens de codage (54) pouvant en outre être mis en oeuvre sur lesdites données d'identité pour produire des données codées représentant les deux paramètres détectés et ladite identité.
